# EUROPÄISCHE PATENTSCHRIFT

(11) **EP 0 883 712 B1**
(45) Veröffentlichungstag und Bekanntmachung des Hinweises auf die Patenterteilung: **04.07.2001**
(21) Anmeldenummer: 97903333.9
(22) Anmeldetag: 20.02.1997
(51) Int. Cl.: D21H 21/18, D21H 17/45

(54) **VERWENDUNG VON HYDROLYSIERTEN POLYMERISATEN VON N-VINYLCARBONSÄUREAMIDEN ALS MITTEL ZUR ERHÖHUNG DER TROCKENFESTIGKEIT VON PAPIER, PAPPE UND KARTON**
USE OF HYDROLYSED POLYMERS OF N-VINYL CARBOXYLIC ACID AMIDES AS AGENTS FOR INCREASING THE DRY STRENGTH OF PAPER, CARD AND CARDBOARD
UTILISATION DE POLYMERES HYDROLYSES D'AMIDES D'ACIDE N-VINYL CARBOXYLIQUE COMME AGENTS POUR ACCROITRE LA RESISTANCE A SEC DU PAPIER, DU CARTON-PATE ET DU CARTON

(30) Priorität: 29.02.1996 DE 19607674
(43) Veröffentlichungstag der Anmeldung: 16.12.1998
(73) Patentinhaber: BASF AKTIENGESELLSCHAFT, 67056 Ludwigshafen (DE)
(72) Erfinder: NIESSNER, Manfred, D-67105 Schifferstadt (DE); NILZ, Claudia, D-67127 Rödersheim-Gronau (DE); UTECHT, Jens, D-68809 Neulu heim (DE); RÜBENACKER, Martin, D-67122 Altrip (DE); SCHUHMACHER, Rudolf, D-67459 Böhl-Iggelheim (DE)
(86) Internationale Anmeldenummer: EP9700801
(87) Internationale Veröffentlichungsnummer: WO9731518

(56) Entgegenhaltungen:
- EP-A- 0 216 387
- EP-A- 0 262 577
- EP-A- 0 331 047
- EP-B- 0 251 182
- WO-A-94/13882
- DE-A- 4 411 311
- DE-B- 2 741 753
- US-A- 2 721 140
- US-A- 4 421 602

## Beschreibung

Die Erfindung betrifft die Verwendung von partiell hydrolysierten Polymerisaten von N-Vinylcarbonsäureamiden als Mittel zur Erhöhung der Trockenfestigkeit von Papier, Pappe und Karton.

Aus der US-A-2 721 140 ist bekannt, Polyvinylaminhydrochlorid als Hilfsmittel bei der Herstellung von Papier zu verwenden. Man erhält hierbei Papier mit einer hohen Naßfestigkeit.

Aus der US-A-4 421 602 sind partiell hydrolysierte, wasserlösliche Polymerisate von N-Vinylformamid bekannt, die N-Vinylformamid-Einheiten und Vinylamin-Einheiten enthalten. Die Polymerisate werden als Mittel zur Erhöhung der Flockung, Retention und Entwässerungsgeschwindigkeit bei der Herstellung von Papier verwendet.

Aus der EP-A-0 216 387 sind Mittel zur Erhöhung der Trockenfestigkeit von Papier bekannt. Es handelt sich dabei um Vinylamin-Einheiten enthaltende wasserlösliche Copolymerisate, die durch Copolymerisieren von N-Vinylformamid mit monoethylenisch ungesättigten Monomeren aus der Gruppe Vinylacetat, Vinylpropionat, der C₁- bis C₄-Alkylvinylether, der Ester, Nitrile und Amide von Acrylsäure und Methacrylsäure und N-Vinylpyrrolidon und Abspalten der Formylgruppen aus den Copolymerisaten erhältlich sind. Vorzugsweise werden Copolymerisate aus N-Vinylformamid und Vinylacetat, deren Monomereinheiten zu jeweils 30 bis 100 mol-% hydrolysiert sind, bei der Papierherstellung verwendet.

Zur Herstellung von Papier mit hoher Trockenfestigkeit ist es bekannt, auf die Oberfläche von Papier verdünnte wäßrige Lösungen von synthetischen Polymerisaten, die als Trockenverfestigungsmittel wirken, aufzutragen und das so imprägnierte Papier zu trocknen. Die Mengen an Trockenverfestigungsmittel, die möglichst gleichmäßig auf die Oberfläche des Papiers aufgebracht werden sollen, betragen in der Regel 0,1 bis 4 Gew.-%, bezogen auf trokkenes Papier. Geeignete Trockenverfestigungsmittel sind beispielsweise aus der DE-B-2 741 753, EP-B-0 013 969 und EP-B-0 036 993 bekannt. Da die Trockenverfestigungsmittel in Form einer verdünnten wäßrigen Polymerlösung auf die Oberfläche des Papiers aufgetragen werden - im allgemeinen beträgt die Polymerkonzentration der Präparationslösungen 1 bis 10 Gew.-% - ist beim nachfolgenden Trocknungsprozeß eine beträchtliche Menge an Wasser zu verdampfen. Der Trocknungsschritt ist daher sehr energieaufwendig. Die Kapazität der üblichen Trocknungseinrichtungen an Papiermaschinen ist aber nicht so groß, daß man bei der maximal möglichen Produktionsgeschwindigkeit der Papiermaschinen durch Auftrag von wäßrigen Polymerlösungen Papiere mit verbesserter Trockenfestigkeit herstellen kann. Die Produktionsgeschwindigkeit der Papiermaschinen muß vielmehr bei einem Oberflächenauftrag von Trockenverfestigungsmitteln zurückgenommen werden, damit das Papier in ausreichendem Maße getrocknet wird.

Aus der EP-B-0 251 182 sind Copolymerisate bekannt, die Vinylamingruppen in Salzform, Vinylformamid- und Acrylnitrilgruppen sowie gegebenenfalls geringe Anteile an Acrylamid- und Acrylsäuregruppen enthalten. Diese Copolymerisate werden beispielsweise bei der Herstellung von Papier verwendet und wirken als Entwässerungs- und Retentionsmittel sowie als Mittel zur Erhöhung der Trockenfestigkeit von Papier.

Aus der DE-A-4 411 311 ist ein Verfahren zur Herstellung lagerstabiler wäßriger Lösungen von Vinylamin-Einheiten enthaltenden Polymerisaten durch Hydrolyse von N-Vinylcarbonamid-Einheiten enthaltenden Polymerisaten mit Säuren in wäßrigem Medium und Entfernen der aus den Polymerisaten abgespaltenen Carbonsäuren aus der wäßrigen Polymerisatlösung bekannt. Die Hydrolyse wird dabei soweit geführt, daß 30 - 100, vorzugsweise 70 - 95 Mol-% Vinylamineinheiten aus den einpolymerisierten Vinylcarbonsäureamid-Einheiten entstehen. Die so erhältlichen Polymeren werden als Trocken- und Naßverfestigungsmittel bei der Herstellung von Papier verwendet.

Aus der EP-A-0 331 047 ist ein Verfahren zur Herstellung von Papier bekannt, wobei als Papierverfestigungsmittel hydrolysierte Polyvinylamide eingesetzt werden, deren Hydrolysegrad mindestens 10, vorzugsweise mehr als 90 % beträgt.

Der vorliegenden Erfindung liegt die Aufgabe zugrunde, ein weiteres Prozeßhilfsmittel für die Herstellung von Papier zur Verfügung zu stellen, das zu einer Erhöhung der Trockenfestigkeit führt.

Die Aufgabe wird erfindungsgemäß gelöst mit der Verwendung von hydrolysierten Polymerisaten von N-Vinylcarbonsäureamiden, die durch alleinige Polymerisation von N-Vinylcarbonsäureamiden der Formel 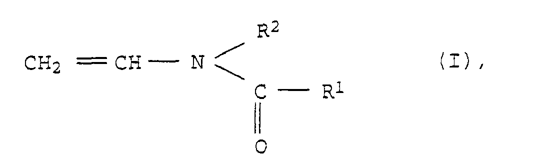 in der R¹, R² =H oder C₁- bis C₆-Alkyl bedeuten, und Abspaltung von 1 bis 20 mol-% der Gruppen der Formel 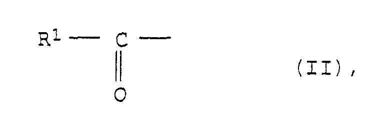 in der R¹ für H oder C₁- bis C₆-Alkyl steht, aus den Polymerisaten erhältlich sind, als Mittel zur Erhöhung der Trockenfestigkeit von Papier, Pappe und Karton.

Zur Herstellung der Polymerisate kommen als Monomere N-Vinylcarbonsäureamide der Formel 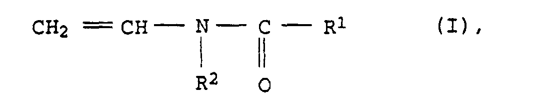 in Betracht, in der R¹ und R² gleich oder verschieden sein können und für Wasserstoff und C₁- bis C₆-Alkyl stehen. Geeignete Monomere sind beispielsweise N-Vinylformamid (R¹=R²=H in Formel I) N-Vinyl-N-Methylformamid, N-Vinylacetamid, N-Vinyl-N-Methylacetamid, N-Vinyl-N-Ethylacetamid, N-Vinyl-N-Methylpropionamid und N-Vinylpropionamid. Zur Herstellung der Polymerisate können die genannten Monomeren entweder allein oder in Mischung untereinander polymerisiert werden. Vorzugsweise geht man von Homopolymerisaten des N-Vinylformamids aus.

Die Polymerisation wird nach bekannten Verfahren in Gegenwart oder auch in Abwesenheit von inerten Lösemitteln oder inerten Verdünnungsmitteln durchgeführt. Da die Polymerisation in Abwesenheit von inerten Löse- oder Verdünnungsmitteln meistens zu uneinheitlichen Polymerisaten führt, ist die Polymerisation in einem inerten Lose- oder Verdünnungsmittel bevorzugt. Geeignet sind beispielsweise solche inerten Verdünnungsmittel, in denen die N-Vinylcarbonsäureamide löslich sind. Für die Lösungspolymerisation eignen sich beispielsweise inerte Lösemittel, wie Methanol, Ethanol, Isopropanol, n-Propanol, n-Butanol, sek.-Butanol, Tetrahydrofuran, Dioxan, Wasser sowie Mischungen der genannten inerten Lösemittel. Die Polymerisation kann kontinuierlich oder diskontinuierlich durchgeführt werden. Die Polymerisate werden im allgemeinen unter Mitverwendung von radikalbildenden Initiatoren hergestellt.

Als radikalbildende Initiatoren sind vorzugsweise alle diejenigen Verbindungen geeignet, die bei der jeweils gewählten Polymerisationstemperatur eine Halbwertszeit von weniger als 3 Stunden aufweisen. Falls man die Polymerisation zunächst bei niedrigerer Temperatur startet und bei höherer Temperatur zu Ende führt, so ist es zweckmäßig, mit mindestens zwei bei verschiedenen Temperaturen zerfallenden Initiatoren zu arbeiten, nämlich zunächst einen bereits bei niedrigerer Temperatur zerfallenden Initiator für den Start der Polymerisation einzusetzen und dann die Hauptpolymerisation mit einem Initiator zu Ende zu führen, der bei höherer Temperatur zerfällt. Man kann wasserlösliche sowie wasserunlösliche Initiatoren oder Mischungen von wasserlöslichen und wasserunlöslichen Initiatoren einsetzen. Die in Wasser unlöslichen Initiatoren sind dann in der organischen Phase löslich. Für die im folgenden angegebenen Temperaturbereiche kann man beispielsweise die dafür aufgeführten Initiatoren verwenden.

### Temperatur: 40 bis 60°C:

Acetylcyclohexansulfonylperoxid, Diacetylperoxiddicarbonat, Dicyclohexylperoxidicarbonat, Di-2-ethylhexylperoxidicarbonat, tert.-Butylperneodecanoat, 2,2'-Azobis-(4-methoxy-2,4-dimethylvaleronitril), 2,2'-Azobis- (2-methyl-N-phenylpropionamidin)dihydrochlorid, 2,2'-Azobis-(2-methylpropion-amidin)dihydrochlorid.

Temperatur: 60 bis 80°C: tert.-Butylperpivalat, Dioctanoylperoxid, Dilauroylperoxid, 2,2'-Azobis-(2,4-dimethylvaleronitril).

### Temperatur: 80 bis 100°C:

Dibenzoylperoxid, tert.-Butylper-2-ethylhexanoat, tert.-Butylpermaleinat, 2,2'-Azobis-(isobutyronitril), Dimethyl-2,2'-azobisisobutyrat, Natriumpersulfat, Kaliumpersulfat, Ammoniumpersulfat.

### Temperatur: 100 bis 120°C:

Bis-(tert.-butylperoxid)-cyclohexan, tert.-Butylperoxiisopropylcarbonat, tert.-Butylperacetat, Wasserstoffperoxid.

### Temperatur: 120 bis 140°C:

2,2-Bis-(tert.-butylperoxi)-butan, Dicumylperoxid, Di-tert.-amylperoxid, Di-tert.-butylperoxid.

### Temperatur: >140°C:

p-Menthanhydroperoxid, Pinanhydroperoxid, Cumolhydroperoxid und tert.-Butylhydroperoxid.

Verwendet man zusätzlich zu den genannten Initiatoren noch Salze oder Komplexe von Schwermetallen, z.B. Kupfer-, Kobalt-, Mangan-, Eisen-, Vanadium-, Nickel- und Chromsalze oder organische Verbindungen, wie Benzoin, Dimethylanilin oder Ascorbinsäure, so können die Halbwertszeiten der angegebenen radikalbildenden Initiatoren verringert werden. So kann man beispielsweise tert.-Butylhydroperoxid unter Zusatz von 5 ppm Kupfer-II-acetylacetonat bereits so aktivieren, daß bereits bei 100°C polymerisiert werden kann. Die reduzierende Komponente von Redoxkatalysatoren kann auch beispielsweise von Verbindungen wie Natriumsulfit, Natriumbisulfit, Natriumformaldehydsulfoxylat und Hydrazin gebildet werden. bezogen auf die bei der Polymerisation eingesetzten Monomeren verwendet man 0,01 bis 20, vorzugsweise 0,05 bis 10 Gew.-% eines Polymerisationsinitiators oder einer Mischung mehrerer Polymerisationsinitiatoren. Als Redoxkomponenten setzt man 0,01 bis 15 % der reduzierend wirkenden Verbindungen zu. Schwermetalle werden im Bereich von 0,1 bis 100 ppm, vorzugsweise 0,5 bis 10 ppm eingesetzt. Oft ist es von Vorteil, eine Kombination aus Peroxid, Reduktionsmittel und Schwermetall als Redoxkatalysator einzusetzen.

Die Polymerisation kann auch durch Einwirkung von ultravioletter Strahlung, gegebenenfalls in Gegenwart von UV-Initiatoren, durchgeführt werden. Für das Polymerisieren unter Einwirkung von UV-Strahlen setzt man die dafür üblicherweise in Betracht kommenden Fotoinitiatoren bzw. Sensibilisatoren ein. Hierbei handelt es sich beispielsweise um Verbindungen wie Benzoin und Benzoinether, α-Methylbenzoin oder α-Phenylbenzoin. Auch sogenannte Triplett-Sensibilisatoren, wie Benzildiketale können verwendet werden. Als UV-Strahlungsquellen dienen beispielsweise neben energiereichen UV-Lampen, wie Kohlenbogenlampen, Quecksilberdampflampen oder Xenonlampen auch UV-arme Lichtquellen, wie Leuchtstoffröhren mit hohem Blauanteil.

Um Polymerisate mit niedrigem K-Wert herzustellen, wird die Polymerisation zweckmäßigerweise in Gegenwart von Reglern durchgeführt. Geeignete Regler sind beispielsweise Schwefel in gebundener Form enthaltende organische Verbindungen. Hierzu gehören beispielsweise Mercaptoverbindungen, wie Mercaptoethanol, Mercaptopropanol, Mercaptobutanol, Mercaptoessigsäure, Mercaptopropionsäure, Butylmercaptan und Dodecylmercaptan. Als Regler eignen sich außerdem Allylverbindungen, wie Allylalkohol, Aldehyde, wie Formaldehyd, Acetaldehyd, Propionaldehyd, n-Butyraldehyd und Isobutyraldehyd, Ameisensäure, Ammoniumformiat, Propionsäure, Hydrazinsulfat und Butenole. Falls die Polymerisation in Gegenwart von Reglern durchgeführt wird, benötigt man davon 0,05 bis 20 Gew.-%, bezogen auf die bei der Polymerisation eingesetzten Monomeren.

Die Polymerisation der Monomeren der Formel I erfolgt üblicherweise in einer Inertgasatmosphäre unter Ausschluß von Luftsauerstoff. Während der Polymerisation wird im allgemeinen für eine gute Durchmischung der Reaktionsteilnehmer gesorgt. Bei kleineren Ansätzen, bei denen eine sichere Abführung der Polymerisationswärme gewährleistet ist, kann man die Monomeren diskontinuierlich copolymerisieren, indem man das Reaktionsgemisch auf die Polymerisationstemperatur erhitzt und dann die Reaktion ablaufen läßt. Diese Temperaturen liegen dabei im Bereich von 40 bis 180°C, wobei unter Normaldruck, vermindertem oder auch erhöhtem Druck gearbeitet werden kann. Polymerisate mit einem hohen Molekulargewicht erhält man, wenn man die Polymerisation in Wasser durchführt. Dies kann beispielsweise für die Herstellung wasserlöslicher Polymerisate in wäßriger Lösung, als Wasser-in-Öl-Emulsion oder nach dem Verfahren der umgekehrten Suspensionspolymerisation erfolgen.

Um eine Verseifung der monomeren N-Vinylcarbonsäureamide während der Polymerisation in wäßriger Lösung zu vermeiden, führt man die Polymerisation vorzugsweise in einem pH-Wert-Bereich von 4 bis 9, insbesondere von 5 bis 8 durch. In vielen Fällen empfiehlt es sich, zusätzlich noch in Gegenwart von Puffern zu arbeiten, z.B. zur wäßrigen Phase primäres oder sekundäres Natriumphosphat zuzusetzen.

Die auf diese Weise erhältlichen Polymerisate von N-Vinylcarbonsäureamiden, vorzugsweise Poly-N-Vinylformamid, haben K-Werte von 8 bis 300, vorzugsweise 10 bis 250, bestimmt nach H. Fikentscher bei 25°C und pH 7 an 0,5 %igen wäßrigen Polymerlösungen.

Aus den oben beschriebenen Polymerisaten erhält man durch teilweise Abspaltung von Gruppen der Formel 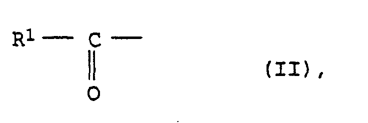 aus den Monomer-Einheiten der Formel III unter Bildung von Amin- bzw. Ammoniumgruppen die erfindungsgemäß zu verwendenden hydrolysierten Polymerisate:

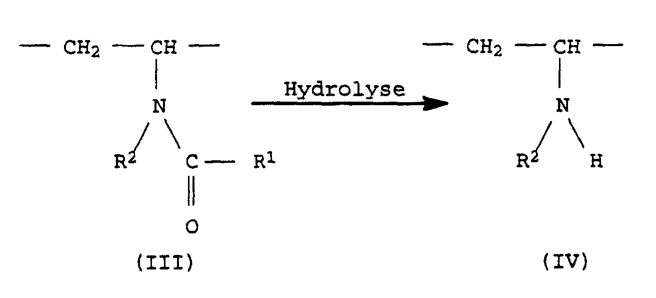

Die Substituenten R¹ und R² haben in den Formel (II) und (III) jeweils die in Formel (I) angegebene Bedeutung.

Die Hydrolyse wird vorzugsweise in Gegenwart von Wasser unter Einwirkung von Säuren, Basen oder Enzymen durchgeführt, kann jedoch auch in Abwesenheit von Säuren, Basen oder Enzymen erfolgen. In Abhängigkeit von den Reaktionsbedingungen bei der Hydrolyse, d.h. der Menge an Säure oder Base, bezogen auf das zu hydrolysierende Polymerisat, und der Reaktionstemperatur bei der Hydrolyse erhält man verschiedene Hydrolysegrade. Die Hydrolyse wird so weit geführt, daß 1 bis 20 mol-%, der einpolymerisierten Monomereinheiten III aus dem Polymer abgespalten werden. Erfindungsgemäß werden solche Polymerisate eingesetzt, die 1 bis 20 mol-% Vinylamin-Einheiten und 99 bis 80 mol-% N-Vinylformamid-Einheiten enthalten.

Für die Hydrolyse geeignete Säuren sind beispielsweise Mineralsäuren, wie Halogenwasserstoff (gasförmig oder in wäßriger Lösung), Schwefelsäure, Salpetersäure, Phosphorsäure (ortho-, meta- oder Polyphoshorsäure) und organische Säuren, z.B. C₁- bis C₅-Carbonsäuren, wie Ameisensäure, Essigsäure und Propionsäure oder die aliphatischen oder aromatischen Sulfonsäuren, wie Methansulfonsäure, Benzolsulfonsäure oder Toluolsulfonsäure. Vorzugsweise verwendet man zur Hydrolyse Salzsäure oder Schwefelsäure. Bei der Hydrolyse mit Säuren beträgt der pH-Wert 0 bis 5. Pro Formylgruppenäquivalent im Polymerisat benötigt man beispielsweise 0,05 bis 1,5 Äquivalente an Säure, vorzugsweise 0,4 bis 1,2.

Bei der Hydrolyse mit Basen können Metallhydroxide von Metallen der ersten und zweiten Hauptgruppe des Periodischen Systems verwendet werden, beispielsweise eignen sich Lithiumhydroxid, Natriumhydroxid, Kaliumhydroxid, Calciumhydroxid, Strontiumhydroxid und Bariumhydroxid. Ebenso können aber auch Ammoniak und Alkylderivate des Ammoniaks verwendet werden, z.B. Alkyl- oder Arylamine z.B. Triethylamin, Monoethanolamin, Diethanolamin, Triethanolamin, Morpholin oder Anilin. Bei der Hydrolyse mit Basen beträgt der pH-Wert 8 bis 14. Die Basen können in festem, flüssigem oder gegebenenfalls auch in gasförmigem Zustand verdünnt oder unverdünnt eingesetzt werden. Vorzugsweise verwendet man als Basen für die Hydrolyse Ammoniak, Natronlauge oder Kalilauge. Die Hydrolyse im sauren oder im alkalischen pH-Bereich erfolgt z.B. bei Temperaturen von 30 bis 170, vorzugsweise 50 bis 120°C. Sie ist nach etwa 2 bis 8, vorzugsweise 3 bis 5 Stunden beendet. Besonders bewährt hat sich eine Verfahrensweise, bei der zur Hydrolyse die Basen oder Säuren in wäßriger Lösung zugesetzt werden. Nach der Hydrolyse führt man i.a. eine Neutralisation durch, so daß der pH-Wert der hydrolysierten Polymerlösung 2 bis 8, vorzugsweise 3 bis 7 beträgt. Die Neutralisation ist,dann erforderlich, wenn ein Fortschreiten der Hydrolyse von teilweise hydrolysierten Polymerisaten vermieden oder verzögert werden soll. Die Hydrolyse kann auch mit Hilfe von Enzymen vorgenommen werden. Der K-Wert der hydrolysierten Polymerisate beträgt 8 bis 300, vorzugsweise 10 bis 250 (gemessen in 5 %iger wäßriger Kochsalzlösung bei einer Polymerkonzentration von 0,5 Gew.-%, einem pH-Wert von 1,5 und einer Temperatur von 25°C).

Die oben beschriebenen partiell hydrolysierten N-Vinylcarbonsäureamidpolymerisate können bei der Herstellung aller bekannten Papier-, Pappe- und Kartonqualitäten eingesetzt werden, z.B. für die Trockenverfestigung von Schreib-, Druck- und Verpackungspa- pieren. Die Papiere können aus einer Vielzahl verschiedenartiger Fasermaterialien hergestellt werden, beispielsweise aus Sulfitoder Sulfat-Zellstoff in gebleichtem oder in ungebleichtem Zustand, Holzschliff, Druckschliff (PGW), CTMP oder Altpapier. Die Papierherstellung erfolgt beispielsweise in dem pH-Bereich von 4,5 bis 8, vorzugsweise bei pH-Werten von 6 bis 7. Die Einstellung des pH-Werts der Papierstoffsuspension erfolgt beispielsweise durch Zugabe von Schwefelsäure oder Aluminiumsulfat. Vorzugsweise verwendet man nur geringe Mengen an Aluminiumsulfat. Die partiell hydrolysierten N-Vinylcarbonsäureamidpolymerisate werden als Mittel zur Erhöhung der Trockenfestigkeit von Papier, Pappe und Karton dem Papierstoff vor der Entwässerung in Mengen von beispielsweise 0,01 bis 5, vorzugsweise 0,5 bis 2 Gew.-%, bezogen auf trockene Fasern, zugesetzt. Im Gegensatz zu Copolymerisaten von N-Vinylformamid erhält man mit den erfindungsgemäß zu verwendenden hydrolysierten Polymerisaten von N-Vinylcarbonsäureamiden Papiererzeugnisse mit einer erhöhten Trockenfestigkeit.

Die in den folgenden Beispielen angegebenen Teile sind Gewichtsteile, die Prozentangaben beziehen sich auf das Gewicht der Stoffe. Der K-Wert der Polymerisate wurde nach H. Fikentscher, Cellulosechemie, Band 13, 58-64 und 71-74 (1932) bei einer Temperatur von 20°C in 5 %igen wäßrigen Kochsalzlösungen bei einem pH-Wert von 7 und einer Polymerkonzentration von 0,5 % bestimmt; dabei bedeutet K = k 10³. Die Viskositäten der Polymerlösungen wurde mit einem Brookfield-Viskosimeter bei 20°C gemessen.

In den Laborversuchen wurden die Blätter in einem Rapid-Köthen Laborblattbildner hergestellt. Die Trockenreißlänge wurde gemäß DIN 53 112, Blatt 1 bestimmt. Die Weiße der Papierblätter wurde mit Hilfe eines Reflektionsfotometers (Elrefo-Gerät) nach DIN 53 145 bestimmt. Die Ermittlung des CMT-Wertes erfolgte nach DIN 53 143, der Trockenberstdruck wurde nach DIN 53 141 ermittelt.

### Beispiele

### Polymer 1

Homopolymerisat aus N-Vinylformamid mit einem K-Wert von 90, aus dem 5,3 % der Formylgruppen durch Hydrolyse mit Salzsäure abgespalten wurden. Es liegt als wäßrige Lösung vor (Polymergehalt: 14,9 Gew.-%, Feststoffgehalt: 16,5 Gew.-%, Viskosität: 11500 mPas, pH-Wert 5).

### Polymer 2

Homopolymerisat aus N-Vinylformamid mit einem K-Wert von 90, aus dem 10,4 % der Formylgruppen durch Hydrolyse mit Salzsäure abgespalten wurden. Es liegt als wäßrige Lösung vor (Polymergehalt: 14,3 Gew.-%, Feststoffgehalt: 16,5 Gew.-%, Viskosität: 8460 mPas, pH-Wert 5).

### Polymer 3 (Vergleich)

Homopolymerisat aus N-Vinylformamid mit einem K-Wert von 90, aus dem 21,6 % der Formylgruppen durch Hydrolyse mit Salzsäure abgespalten wurden. Es liegt als wäßrige Lösung vor (Polymergehalt: 15,0 Gew.-%, Feststoffgehalt: 17,8 Gew.-%, Viskosität: 5500 mPas, pH-Wert 3,8).

### Polymer 4 (Vergleich)

Homopolymerisat aus N-Vinylformamid mit einem K-Wert von 90, aus dem 100 % der Formylgruppen durch Hydrolyse mit Salzsäure abgespalten wurden. Es liegt als wäßrige Lösung vor (Polymergehalt: 12,4 Gew.-%, Feststoffgehalt: 24,0 Gew.-%, Viskosität: 940 mPas, pH-Wert 3,8).

### Polymer 5 (Vergleich)

Handelsüblicher Trockenverfestiger auf Basis eines kationischen Polyacrylamids einer Molmasse M_{w} von 1,1 Mio. Das Polymer wird in 10 %iger wäßriger Lösung eingesetzt.

### Beispiele

In einem Rapid-Köthen-Blattbildner wurden Papierblätter mit einem Flächengewicht von 120 g/m² hergestellt. Der Papierstoff bestand aus 80 % Altpapier und 20 % gebleichtem Buchensulfitzellstoff mit einem Mahlgrad von 44°SR (Schopper-Riegler) in 0,5 %iger wäßriger Suspension. Der pH-Wert der Stoffsuspension betrug 6,0. Die Suspension wurde in 6 gleiche Teile aufgeteilt, 5 davon wurden mit den in der Tabelle unter (b) bis (f) angegebenen Polymeren versetzt.
(a) Die Stoffsuspension enthielt keine weiteren Zusätze.
(b)-(e) Die Stoffsuspension wurde mit 0,5 %, bezogen auf trockenen Faserstoff, der Polymeren 1 bis 4 versetzt.
(f) Die Stoffsuspension wurde mit 0,5 %, bezogen auf trockenen Faserstoff, des Polymers 5 versetzt.

Die Stoffsuspensionen wurden jeweils in einem Rapid-Käthen-Blattbildner entwässert. Die Tests (a) und (f) sind Vergleichsbeispiele, die Tests (b), (c), (d) und (e) sind Beispiele gemäß Erfindung.

Von den erhaltenen Blättern (a) bis (f) wurden die Trockenreißlänge, der Trockenberstdruck sowie der CMT-Wert bestimmt (vgl. Tabelle 1).

**Tabelle 1**

| Beispiel | | 1 | 2 | | | |
|---|---|---|---|---|---|---|
| Vergleichsbeispiel | 1 | | | 2 | 3 | 4 |
| Test | (a) | (b) | (c) | (d) | (e) | (f) |
| Polymer | - | 1 | 2 | 3 | 4 | 5 |
| Trockenreißlänge [m] | 2622 | 3208 | 3147 | 2762 | 2843 | 3054 |
| Trockenberstdruck [kPa]* | 160 | 203 | 183 | 183 | 176 | 194 |
| CMT-Wert [N]* | 118 | 151 | 137 | 123 | 147 | 156 |

| | | | | | | |
|---|---|---|---|---|---|---|
| * bzgl. Flächengewicht 120 g/m² | | | | | | |

## Patentansprüche

1. Verwendung von hydrolysierten Polymerisaten von N-Vinylcarbonsäureamiden, die durch alleinige Polymerisation von N-Vinylcarbonsäureamiden der Formel 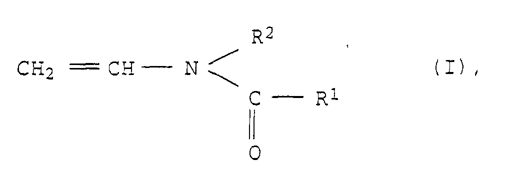 in der R¹, R² =H oder C₁- bis C₆-Alkyl bedeuten, und Abspaltung von 1 bis 20 mol-% der Gruppen der Formel 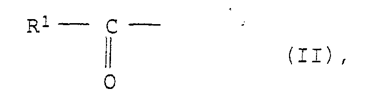 in der R¹ für H oder C₁- bis C₆-Alkyl steht, aus den Polymerisaten erhältlich sind, als Mittel zur Erhöhung der Trockenfestigkeit von Papier, Pappe und Karton.

2. Verwendung nach Anspruch 1, dadurch gekennzeichnet, daß man als Verbindung der Formel I N-Vinylformamid einsetzt.

3. Verwendung nach einem der Ansprüche 1 oder 2, dadurch gekennzeichnet, daß man die partiell hydrolysierten Polymerisate in Mengen von 0,01 bis 5 Gew.-%, bezogen auf trockene Fasern, dem Papierstoff vor der Blattbildung zusetzt.

4. Verwendung nach einem der Ansprüche 1 oder 2, dadurch gekennzeichnet, daß man die partiell hydrolysierten Polymerisate in Mengen von 0,5 bis 2 Gew.-%, bezogen auf trockene Fasern, dem Papierstoff vor der Blattbildung zusetzt.

## Claims

1. The use of hydrolyzed polymers of N-vinylcarboxamides obtainable by sole polymerization of N-vinylcarboxamides of the formula 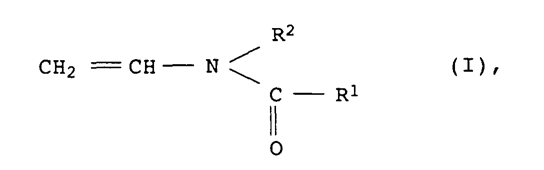 where R¹ and R² are each hydrogen or C₁- to C₆-alkyl, and elimination from the polymers of from 1 to 20 mol% of the groups of the formula 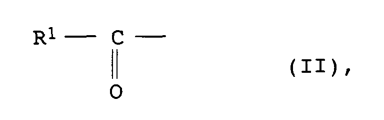 where R¹ is hydrogen or C₁- to C₆-alkyl, as paper, paperboard and cardboard dry strength enhancers.

2. A use as claimed in claim 1, wherefor the compound of the formula I used is N-vinylformamide.

3. A use as claimed in claim 1 or 2, wherefor the partially hydrolyzed polymers are added to the paper stock prior to sheet formation in amounts of from 0.01 to 5% by weight, based on dry fibers.

4. A use as claimed in claim 1 or 2, wherefor the partially hydrolyzed polymers are added to the paper stock prior to sheet formation in amounts of from 0.5 to 2% by weight, based on dry fibers.

## Revendications

1. Utilisation de polymères hydrolysés d'amides d'acide N-vinylcarboxylique, que l'on peut obtenir par simple polymérisation d'amides d'acide N-vinyl-carboxylique de formule 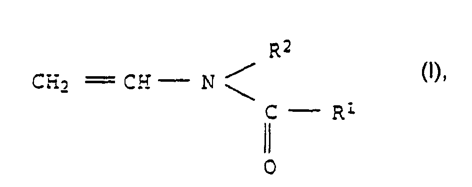 dans laquelle R¹, R², représentent H ou un groupe alkyle en C₁ à C₆, et par clivage de 1 à 20% en moles des groupes de formule 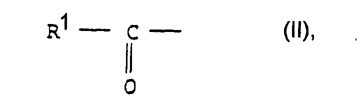 dans laquelle R¹ représente H ou un groupe alkyle en C₁ à C₆, à partir des polymères, en tant qu'agent pour augmenter la résistance à sec de papiers, cartons pâte et cartons.

2. Utilisation selon la revendication 1, caractérisé en ce que l'on met en oeuvre le N-vinylformamide en tant que composé de formule I.

3. Utilisation selon l'une quelconque des revendications 1 ou 2, caractérisé en ce que l'on ajoute les polymères partiellement hydrolysés en des quantités de 0,01 à 5% en poids, par rapport aux fibres sèches, à la pâte à papier avant de former des feuilles.

4. Utilisation selon l'une quelconque des revendications 1 ou 2, caractérisé en ce que l'on ajoute les polymères partiellement hydrolysés en des quantités de 0,5 à 2% en poids, par rapport aux fibres sèches, à la pâte à papier avant de former des feuilles.
